# EUROPEAN PATENT SPECIFICATION

(11) **EP 3 125 411 B1**
(45) Date of publication and mention of the grant of the patent: **20.03.2019**
(21) Application number: 16181563.4
(22) Date of filing: 27.07.2016
(51) Int. Cl.: H02K 9/06, H02K 5/04, H02K 5/20, H02K 5/18

(54) **IMPROVED MOTOR STRUCTURE**
VERBESSERTE MOTORSTRUKTUR
STRUCTURE DE MOTEUR AMÉLIORÉE

(30) Priority: 28.07.2015 TW 104124412
(43) Date of publication of application: 01.02.2017
(73) Proprietor: Chou, Wen-San, Tainan City (TW)
(72) Inventor: Chou, Wen-San, Tainan City (TW)
(74) Representative: Lang, Christian

(56) References cited:
- GB-A- 1 356 463
- JP-A- H05 122 885
- US-A1- 2009 015 082

## Description

### (a) Technical Field of the Invention

The present invention relates to an improved motor structure and, more particularly, to a motor which can effectively dissipate the heat generated in its housing through multiple paths, so that heat is not easy to accumulate in the motor's housing, and thus the performance and service life of the motor can be increased.

### (b) Description of the Prior Art

In today's industry, motors are one of commonly used devices for providing mechanical power. However, while a motor is running, heat is easy to accumulate in the motor's housing. If the heat is not timely dissipated, the magnetic field provided by the magnets in the motor's housing will decrease, so that the performance of the motor can be gradually reduced. Besides, when the temperature in the motor rises to a certain level, the coils or enamel wires in the motor can be damaged, and this may cause a short circuit, and thus the motor may burn out. For preventing such a problem, a motor is usually provided with a cooling fan. However, the air current generated by the cooling fan of the motor can merely flow along the outer surface of the motor's housing, but cannot flow into the interior of the motor, and thus the capacity of dissipating the heat generated in the motor is limited. The problem of heat accumulation in the motor's housing has not yet been solved completely.

JP H05 122885A discloses a motor with an external cooling fan, where the air flow generated by the cooling fan is guided inside and outside the motor housing.

GB 1356463 and US 2009/0015082 A1 disclose inlet and outlet vent holes at the bearing plates where air intercepting fins are used to guide the cooling air.

### SUMMARY OF THE INVENTION

One object of the present invention is to provide a motor, which can effectively dissipate the heat generated in its housing through multiple paths. The problem is solved by the motor according to the invention as defined by claim 1.

According to one feature of the present invention, the motor generally includes a housing, a front cover, a rotating shaft, and a cooling fan. The housing defines therein an inner space with a front opening. The front cover closes the front opening of the housing and defines a central hole. The surrounding wall of the housing is pressed to form a plurality of air intercepting fins, which are bent outwardly such that a plurality of first inlet holes are defined next to the corresponding air intercepting fins, whereby an outer portion of a whirling, ongoing air current generated by the cooling fan can be guided by the air intercepting fins to pass through the first inlet holes and thus to enter the housing for dissipating heat therein.

According to another feature of the present invention, an air passage is formed on the housing, between two adjacent intercepting fins to allow some of the outer portion of the air current to flow along an outer surface of the housing to cool down the temperature of the housing.

According to one advantage of the present invention, the motor can be used in a high-temperature environment without being damaged. In a test, the motor was continuously operated in a closed space of 70 degrees C for a long time without burning out.

Other objects, advantages, and novel features of the present invention will become more apparent from the following detailed description when taken in conjunction with the accompanying drawings.

### BRIEF DESCRIPTION OF THE DRAWINGS

FIG. 1 shows an exploded view of a motor according to one embodiment of the present invention.
FIG. 2 shows a 3-dimensional view of the motor.
FIG. 3 shows another 3-diemensional view of the motor, which is viewed from a different angle than FIG. 2.
FIG. 4 shows a 3-deminsional view of a front cover used in the motor.
FIG. 5 shows a plan view of the motor.
FIG. 6 shows a sectional view of the motor taken along line E-E in FIG. 5, which demonstrates one portion of the air current being guided by the air intercepting fins to enter the inner space of the motor's housing for dissipating the heat generated in the motor.
FIG. 7 shows a sectional view of the motor taken along line F-F in FIG. 5, which demonstrates one portion of the air current being guided by the air intercepting fins to enter the inner space of the motor's housing for dissipating the heat generated in the motor.
FIG. 8 shows a working view of the motor, which demonstrates that the air current can flow out of the motor's housing via the outlet holes thereof to take away the heat generated in the motor.

### DETAILED DESCRIPTION OF THE PREFERRED EMBODIMENTS

Since the structure and operational principles of a motor have been known widely, a detailed description for the constituent parts thereof is not provided in the following paragraphs.

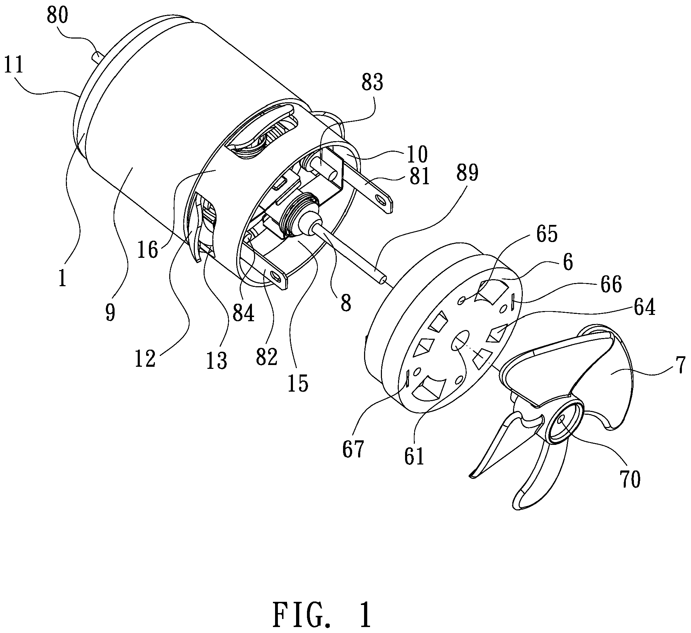

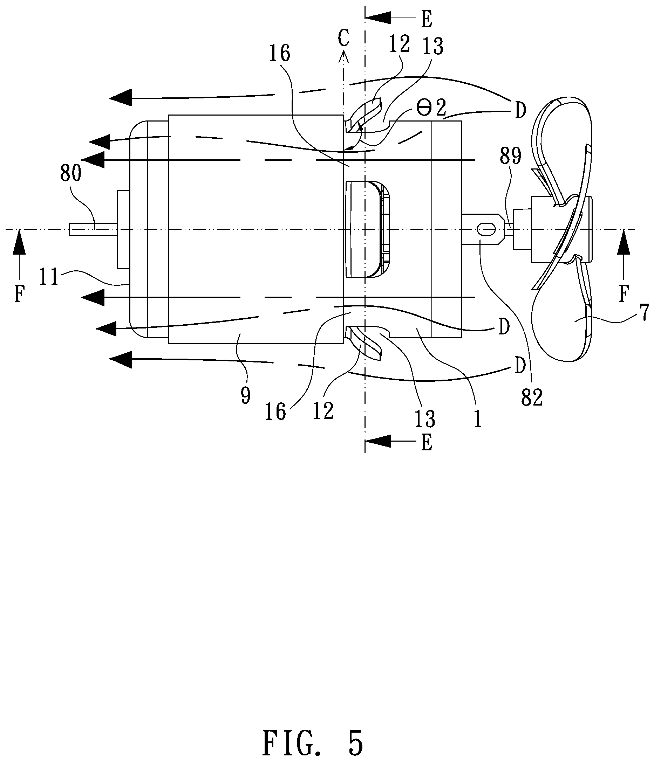

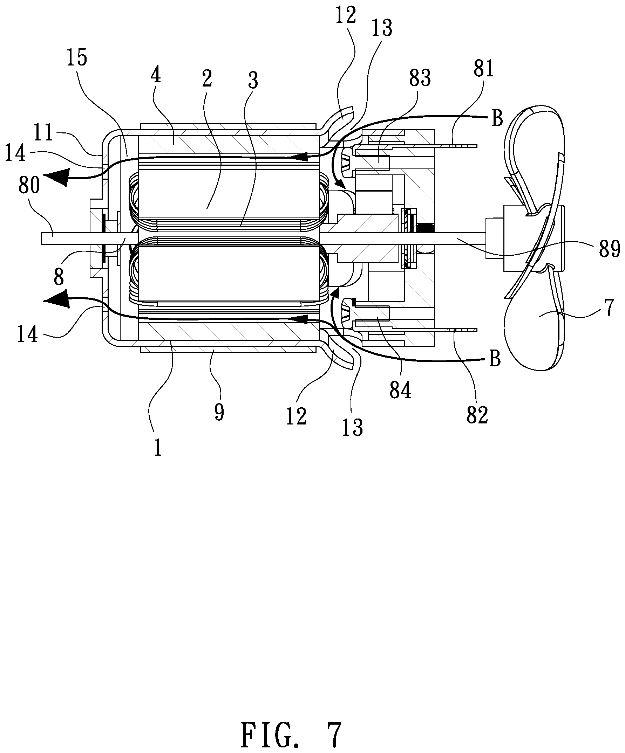

Referring first to FIGS. 1 through 3, a motor according to one embodiment of the present invention is shown, which generally includes a housing 1, a front cover 6, a rotating shaft 8, and a cooling fan 7. The housing 1 defines therein an inner space 15 with a front opening 10 and has a rear closure wall 11 opposite to the front opening 10. The rear closure wall 11 defines a central hole, in which a bearing may be mounted, and a plurality of outlet holes 14 around the central hole. The surrounding wall of the housing 1 is pressed to form a plurality of air intercepting fins 12, which are bent outwardly such that a plurality of inlet holes 13 are defined next to the corresponding air intercepting fins 12. The air intercepting fins 12 extend generally towards the front opening 10 of the housing 1 or the cooling fan 7, at a predetermined angle of (Θ2) to a cross-sectional plane (C) of the housing 1 which is perpendicular to the rotating shaft 8 (see FIG. 5), wherein the predetermined angle (Θ2) is greater than 90 degrees. Since there is no obstruction between two adjacent intercepting fins 12, a plurality of air passages 16 are formed between the intercepting fins 12. Furthermore, a rotor 2, coils 3 and magnets 4, which are necessary elements for a motor, are provided in the inner space 15 of the housing 1 (see FIG. 7). The rotating shaft 8 is mounted across the inner space 15 of the housing 1, wherein the rotating shaft 8 has a first end 80 which is inserted through the central hole of the rear closure wall 11 for connecting with a transmission mechanism (not shown) for providing necessary mechanical power. The rotating shaft 8 has a second end 89 which is inserted out of the front opening 10 of the housing 1 to be fitted with the cooling fan 7, as will be further illustrated below. A magnetically permeable sleeve 9, which can be made of metal, is closely fitted around the outer surface of the housing 1, to increase the performance of the motor.

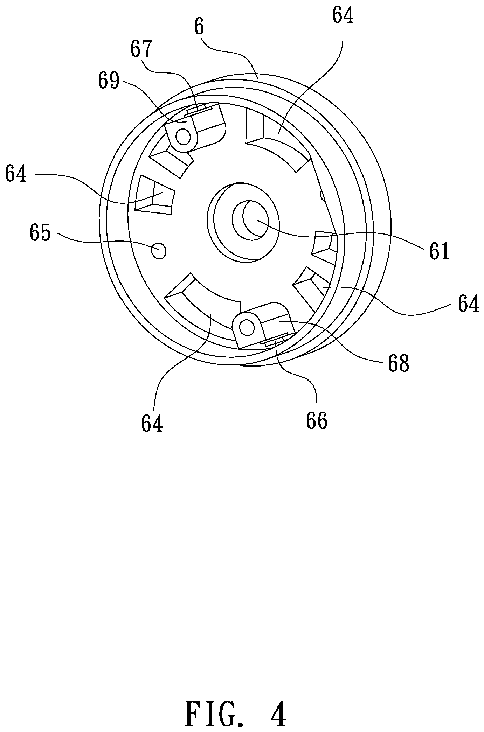

The front cover 6 defines a central hole 61 and a plurality of inlet holes 64 around the central hole 61. Furthermore, the front cover 6 defines two through holes 66, 67, and is provided with two mounting tubes 68, 69 (see FIG. 4) at its inner surface. When the front cover 6 is installed to the housing 1, two electrical terminal blades 81, 82 provided in the housing 1 can be inserted through the two through holes 66, 67 of the front cover 6, while two fixing dowel rods 83, 84 provided in the housing 1 can be inserted into the mounting tubes 68, 69 of the front cover 6, so that the front cover 6 closes the front opening 10 of the housing 1, and electrical connection for the motor is facilitated. Furthermore, the front cover 6 defines a plurality of fixing holes 65, through which a plurality of screws can be engaged with other portions of the housing 1 (not shown), so that the front cover 6 can be installed to the housing 1 more firmly. While the front cover 6 is being installed to the housing 1, the second end 89 of the rotating shaft 8 can be inserted through the central hole 61 of the front cover 6, wherein a bearing (not shown) may be provided in the front cover 6 and fitted with the second end 89 of the rotating shaft 8.

The cooling fan 7 defines a central hole 70, into which the second end 89 of the rotating shaft 8 extending out of the central hole 61 of the front cover 6 can be fitted, so that the cooling fan 7 is attached to and rotated together with the rotating shaft 8.

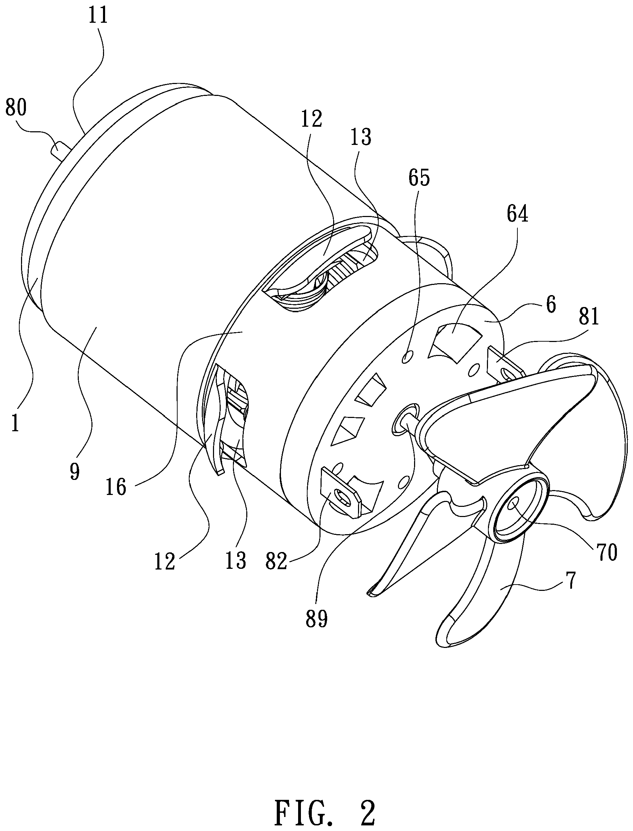

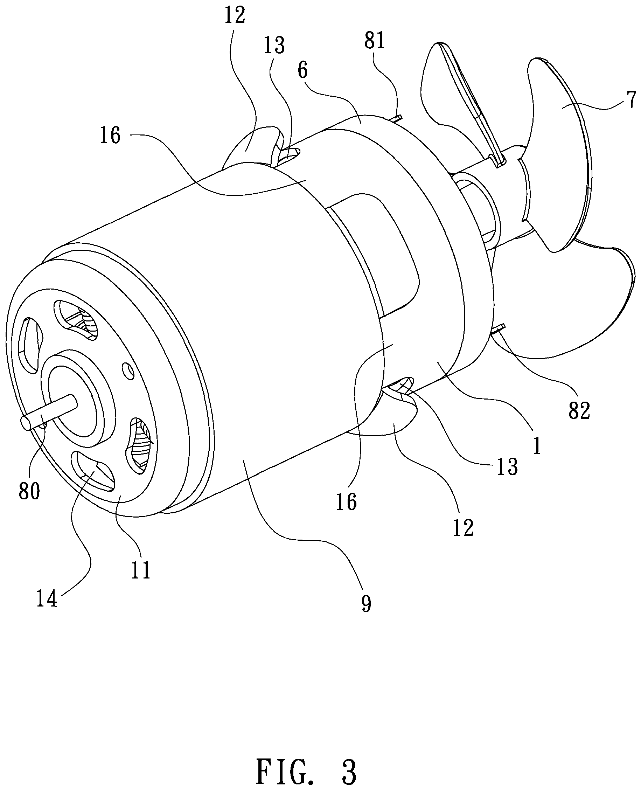

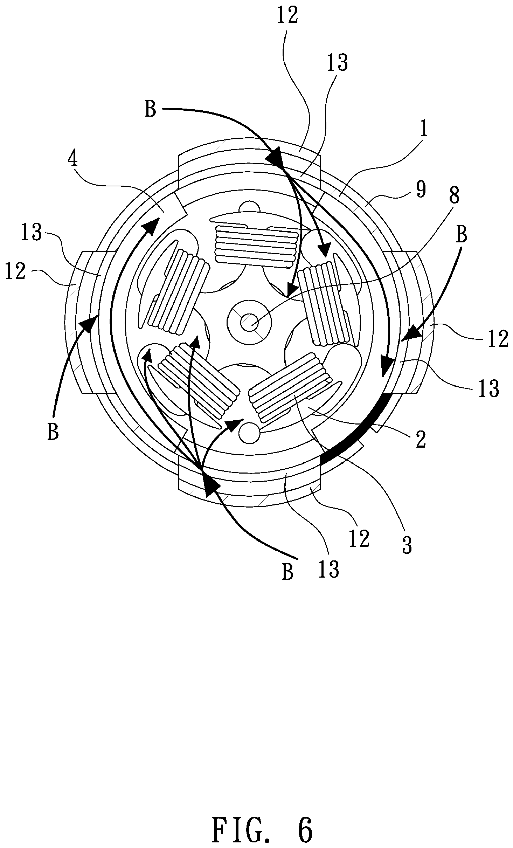

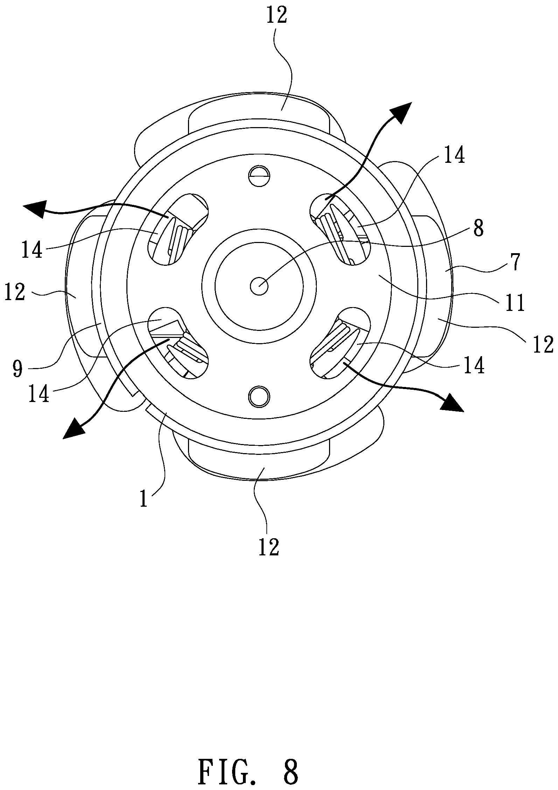

FIGS. 2 and 3 show one embodiment of the motor being assembled from the housing 1, the front cover 6, and the cooling fan 7. When the motor is started, the cooling fan 7 can be rotated together with the rotating shaft 8 to generate a whirling, ongoing air current towards the front cover 6, so that the air at the right side of the cooling fan 7 can be forced to flow into the left side of the cooling fan 7 (see FIG. 5). In particular, the air current can enter the inner space 15 of the housing 1 easily, and the heat generated in the housing 1 can be dissipated effectively through multiple paths (see FIGS. 5, 6 and 7). In addition to a central portion of the air current generated by the cooling fan 7 flowing into the housing 1 via the inlet holes 64 of the front cover 6, an outer portion of the air current, which is outside the area of the front cover 6 and constitutes a large portion of the air current, may enter the inner space 15 of the housing 1 via the inlet holes 13 of the housing 1. Specifically, the most part of the outer portion of the air current can be guided or intercepted by the intercepting fins 12 to pass through the corresponding inlet holes 13 and thus to enter the inner space 15 of the housing 1, as indicated by the airflow path (B) shown in FIG. 7, so that the temperatures of the rotor 2, the coils 3, and the magnets 4 in the housing 1 can be restrained effectively. On the other hand, the rest of the outer portion of the air current may flow along the outer surface of the housing 1 or the sleeve 9 via the air passages 16 between the intercepting fins 12 of the housing 1, as indicated by the airflow path (D) shown in FIG. 5, so that the housing 1 can be effectively cooled down to facilitate dissipation of the heat generated in the housing 1. In this embodiment, the air current which has entered the inner space 15 of the housing 1 can flow out of the housing 1 via the outlet holes 14 (see FIGS. 7 and 8).

As a summary, the intercepting fins 12 and the associated inlet holes 13 of the housing 1 allow the motor of the present invention to provide an airflow path (B) via which the most part of the outer portion of the air current generated by the cooling fan 7 enters the inner space 15 of the housing 1 to dissipate the heat generated in the housing 1. In addition, the air passages 16 between the intercepting fins 12 of the housing 1 allow the motor of the present invention to provide another airflow path (D) via which the rest of the outer portion of the air current flows along the outer surface of the housing 1 to lower the temperature of the housing 1 and thus to increase the capacity of dissipating the heat generated in the housing 1. Through multiple paths for heat dissipation, heat is not easy to accumulate in the housing 1 of the motor; therefore, maximum power output of the motor can be achieved, and thus the performance and service life of the motor can be increased. Even though the motor is operated in a high-temperature environment, it will not burn out.

## Claims

1. Motor including a housing (1), a front cover (6), a rotating shaft (8), and a cooling fan (7), wherein the housing (1) defines therein an inner space (15) with a front opening (10) and has a rear closure wall (11) opposite to the front opening (10), the rear closure wall (11) defining a central hole and a plurality of outlet holes (14); the front cover (6) closes the front opening (10) of the housing (1) and defines a central hole (61); the rotating shaft (8) is mounted across the inner space (15) of the housing (1), the rotating shaft (8) having a first end (80) which is inserted through the central hole of the rear closure wall (11) and having a second end (89) which is inserted through the central hole (61) of the front cover (6); the cooling fan (7) is fixed to the second end (89) of the rotating shaft (8), so that the cooling fan (7) is rotated together with the rotating shaft (8); wherein the housing (1) is pressed to form a plurality of air intercepting fins (12), **characterized in that** the air intercepting fins (12) are bent outwardly such that a plurality of first inlet holes (13) are defined next to the corresponding air intercepting fins (12), whereby an outer portion of a whirling, ongoing air current generated by the cooling fan (7) can be guided by the air intercepting fins (12) to pass through the first inlet holes (13) and thus to enter the housing (1) for dissipating heat therein.

2. The motor of claim 1, wherein the air intercepting fins (12) extend generally towards the cooling fan (7), at a predetermined angle of (Θ2) to a cross-sectional plane (C) of the housing (1) which is perpendicular to the rotating shaft (7), the predetermined angle (Θ2) being greater than 90 degrees.

3. The motor of claim 1, wherein an air passage (16) is formed on the housing (1) between two adjacent intercepting fins (12) to allow some of the outer portion of the air current to flow along an outer surface of the housing (1).

4. The motor of claim 1, wherein the front cover (6) defines a plurality of second inlet holes (64) around its central hole (61) to allow a central portion of the air current to enter the inner space (15) of the housing (1) to cool down the temperature of the housing (1).

5. The motor of claim 1, wherein the front cover (6) defines two through holes (66, 67) which allows two electrical terminal blades (81, 82) provided in the housing (1) to insert therethrough to facilitate electrical connection and installing the front cover (6) to the housing (1).

6. The motor of claim 5, wherein the front cover (6) is provided at its inner surface with a plurality of mounting tubes (68, 69) which allows fixing dowel rods (83, 84) provided in the housing (1) to insert thereinto so as to install the front cover (6) to the housing (1), thereby closing the front opening (10) of the housing (1).

7. The motor of claim 6, wherein the front cover (6) defines a plurality of fixing holes (65), through which a plurality of screws are engaged with other portions of the housing (1), so that the front cover (6) can be installed to the housing (1) more firmly.

## Patentansprüche

1. Motor, der ein Gehäuse (1), eine Frontabdeckung (6), eine Drehwelle (8) und einen Kühlventilator (7) umfasst, wobei das Gehäuse (1) darin einen Innenraum (15) mit einer Frontöffnung (10) definiert und eine hintere Verschlusswand (11) aufweist, die entgegengesetzt zu der Frontöffnung (10) ist, wobei die hintere Verschlusswand (11) ein zentrales Loch und eine Mehrzahl an Auslasslöchern (14) definiert, wobei die Frontabdeckung (6) die Frontöffnung (10) des Gehäuses (1) verschließt und ein zentrales Loch (61) definiert, wobei die Drehwelle (8) durch den Innenraum (15) des Gehäuses (1) montiert ist, wobei die Drehwelle (8) ein erstes Ende (80) aufweist, das durch das zentrale Loch der hinteren Verschlusswand (11) gesteckt ist und ein zweites Ende (89) aufweist, das durch das zentrale Loch (61) der Frontabdeckung (6) gesteckt ist, wobei der Kühlventilator (7) an dem zweiten Ende (89) der Drehwelle (8) befestigt ist, so dass der Kühlventilator (7) zusammen mit der Drehwelle (8) gedreht wird, wobei das Gehäuse (1) gepresst wird, um eine Mehrzahl an Luftfangrippen (12) auszubilden, **dadurch gekennzeichnet, dass** die Luftfangrippen (12) nach außen gebogen sind, so dass eine Mehrzahl an ersten Einlasslöchern (13) neben den entsprechenden Luftfangrippen (12) definiert sind, wobei ein äußerer Teil eines verwirbelten, permanenten Luftstroms, der von dem Kühlventilator (7) erzeugt wird, durch die Luftfangrippen (12) geführt werden kann, um durch die ersten Einlasslöcher (13) zu passieren und dadurch in das Gehäuse zu gelangen, um darin Wärme abzuleiten.

2. Motor nach Anspruch 1, bei dem die Luftfangrippen (12) sich im Allgemeinen zu dem Kühlventilator (7) unter einem vorbestimmten Winkel (θ2) zu einer Querschnittsebene (C) des Gehäuses (1), die senkrecht zu der Drehwelle (7) ist, erstrecken, wobei der vorbestimmte Winkel (θ2) größer als 90 Grad ist.

3. Motor nach Anspruch 1, bei dem ein Luftkanal (16) an dem Gehäuse (1) zwischen zwei benachbarten Luftfangrippen (12) ausgebildet ist, um es etwas von dem äußeren Teil des Luftstroms zu ermöglichen, entlang einer Außenfläche des Gehäuses (1) zu fließen.

4. Motor nach Anspruch 1, bei dem die Frontabdeckung (6) eine Mehrzahl an zweiten Einlasslöchern (64) um ihr zentrales Loch (61) definiert, um es einem zentralen Teil des Luftstroms zu ermöglichen, in den Innenraum (15) des Gehäuses (1) zu gelangen, um die Temperatur des Gehäuses (1) zu senken.

5. Motor nach Anspruch 1, bei dem die Frontabdeckung (6) zwei Durchlasslöcher (66, 67) definiert, was es zwei elektrischen Anschlusslamellen (81, 82), die in dem Gehäuse (1) bereitgestellt sind, ermöglicht, dadurch gesteckt zu werden, um eine elektrische Verbindung zu ermöglichen und die Frontabdeckung (6) an dem Gehäuse (1) zu installieren.

6. Motor nach Anspruch 5, bei dem die Frontabdeckung (6) an ihrer Innenfläche mit einer Mehrzahl an Montagerohren (68, 69) ausgestattet ist, was es Fixierdübelstangen (83, 84), die in dem Gehäuse (1) bereitgestellt sind, ermöglicht, hineingesteckt zu werden, um die Frontabdeckung (6) an dem Gehäuse (1) zu installieren, wodurch die Frontöffnung (10) des Gehäuses (1) geschlossen wird.

7. Motor nach Anspruch 6, bei dem die Frontabdeckung (6) eine Mehrzahl an Fixierlöchern (65) definiert, durch die eine Mehrzahl an Schrauben mit anderen Bereichen des Gehäuses (1) in Eingriff gebracht werden, so dass die Frontabdeckung (6) stabiler an dem Gehäuse (1) installiert werden kann.

## Revendications

1. Moteur comportant un carter (1), un capot avant (6), un arbre tournant (8), et un ventilateur de refroidissement (7), dans lequel le carter (1) définit à l'intérieur un espace interne (15) avec une ouverture avant (10) et a une paroi de fermeture arrière (11) opposée à l'ouverture avant (10), la paroi de fermeture arrière (11) définissant un trou central et une pluralité de trous de refoulement (14); le capot avant (6) ferme l'ouverture avant (10) du carter (1) et définit un trou central (61); l'arbre tournant (8) est monté à travers l'espace interne (15) du carter (1), l'arbre tournant (8) ayant une première extrémité (80) qui est insérée à travers le trou central de la paroi de fermeture arrière (11) et ayant une seconde extrémité (89) qui est insérée à travers le trou central (61) du capot avant (6); le ventilateur de refroidissement (7) est fixé à la seconde extrémité (89) de l'arbre tournant (8), de sorte que le ventilateur de refroidissement (7) soit tourné conjointement à l'arbre tournant (8);
dans lequel le carter (1) est enfoncé pour former une pluralité d'ailettes d'interception d'air (12), **caractérisé en ce que** les ailettes d'interception d'air (12) sont courbées vers l'extérieur de sorte qu'une pluralité de premiers trous d'admission (13) soient définis près des ailettes d'interception d'air (12) correspondantes, moyennant quoi une portion externe d'un courant d'air continu tourbillonnant généré par le ventilateur de refroidissement (7) puisse être guidée par les ailettes d'interception d'air (12) pour passer au travers des premiers trous d'admission (13) et ainsi entrer dans le carter (1) pour y dissiper la chaleur.

2. Moteur selon la revendication 1, dans lequel les ailettes d'interception d'air (12) s'étendent généralement vers le ventilateur de refroidissement (7), à un angle prédéterminé de (Θ2) par rapport à un plan en coupe (C) du carter (1) qui est perpendiculaire à l'arbre tournant (7), l'angle prédéterminé (Θ2) étant supérieur à 90 degrés.

3. Moteur selon la revendication 1, dans lequel un passage d'air (16) est formé sur le carter (1) entre deux ailettes d'interception (12) adjacentes pour permettre à une partie de la portion externe du courant d'air de s'écouler le long d'une surface externe du carter (1).

4. Moteur selon la revendication 1, dans lequel le capot avant (6) définit une pluralité de seconds trous d'admission (64) autour de son trou central (61) pour permettre à une portion centrale du courant d'air d'entrer dans l'espace interne (15) du carter (1) pour refroidir la température du carter (1).

5. Moteur selon la revendication 1, dans lequel le capot avant (6) définit deux trous traversants (66, 67) qui permettent d'insérer deux lames de contact électrique (81, 82) prévues dans le carter (1) pour faciliter une connexion électrique et l'installation du capot avant (6) sur le carter (1).

6. Moteur selon la revendication 5, dans lequel le capot avant (6) est pourvu au niveau de sa surface interne d'une pluralité de tubes de montage (68, 69) qui permettent d'y insérer des tiges de goujon de fixation (83, 84) prévues dans le carter (1) de façon à installer le capot avant (6) sur le carter (1), fermant ainsi l'ouverture avant (10) du carter (1).

7. Moteur selon la revendication 6, dans lequel le capot avant (6) définit une pluralité de trous de fixation (65), à travers lesquels une pluralité de vis sont engagées avec d'autres portions du carter (1), de sorte que le capot avant (6) puisse être installé sur le carter (1) plus fermement.
